# EUROPEAN PATENT APPLICATION

(11) **EP 1 204 275 A2**
(43) Date of publication of application: **08.05.2002**
(21) Application number: 01309284.6
(22) Date of filing: 01.11.2001
(51) Int. Cl.: H04N 7/173

(54) **Network appliance for enhanced television services**

(30) Priority: 02.11.2000 US 703624; 20.09.2001 US 956181
(71) Applicant: Nortel Networks Limited, St. Laurent, Quebec H4S 2A9 (CA)
(72) Inventor: St Maurice, Susan, Carp, Ontario K0A 1L0 (CA); Hui, Man Him, Kanata, Ontario K2K 1B1 (CA); Guennoun, Mouchoine, Ottawa, Ontario K1Y 4L9 (CA); Gaboury, Darrell G., Almonte, Ontario K0A 1A0 (CA)
(74) Representative: Jones, Keith William

(57) **Abstract**

Enhanced television services are delivered and presented on a network appliance without the need for an enhanced-content enabled television set or set-top box. The enhanced content is decoupled from the television signal (or radio signal), allowing for the presentation of the enhanced content alone on a stand-alone network appliance. The network appliance may be a handheld computing device (e.g. a "palm" computing device), a tablette, a remote control with a display or a digital cellular phone handset with a display. The network appliance is enabled for Internet or Intranet access and is also provided with an infrared transmitter so as to operate as a remote control for a television (or radio) having an infrared beam receiver. Through use of the network appliance, the viewer would be presented with the same enhanced content on the network appliance as would be presented to the viewer if an enhanced content enabled television or set-top box (or radio) were being used.

## Description

### FIELD OF THE INVENTION

The present invention relates to enhanced television services and in particular to the use of a network appliance in the presentation of enhanced television services.

### BACKGROUND OF THE INVENTION

The convergence of computers and television has given rise to consumer demand for the delivery of enhanced television services such as interactive television content and specifically Internet World Wide Web (WWW)-based content. One of the standards in this area is the Advanced Television Enhancement Forum (ATVEF), which is a specification for creating and delivering enhanced television services to a range of television, set-top, and PCs. The ATVEF specification uses existing Internet technologies in the delivery of enhanced television services over both analog and digital video systems using terrestrial, cable, satellite and Internet networks.

An example of an enhanced television service would be the presentation to television viewers, during a television newscast, of historical or biographical information concerning a topic raised during the newscast. Another example would be an advertisement that is presented to a television viewer that gives the viewer the opportunity to purchase a product or service advertised during a television broadcast over the Internet. Polling of viewers during a television broadcast is also an example of an enhanced television service.

However, to date, a television viewer must first acquire a television set or set-top box specifically designed to receive and present such enhanced content. As such, widespread adoption by television viewers of enhanced television services has been limited. What is needed is a method, device and computer readable medium that allows enhanced content (or secondary content) to be presented to a television viewer without the need for an enhanced-content enabled television set or set-top box.

### SUMMARY OF THE INVENTION

This invention provides for the delivery and presentation of enhanced content to a television viewer without the need for an enhanced-content enabled television set or set-top box. Instead of being displayed on a television set, the enhanced content is presented to a television viewer on a network appliance such as a handheld computing device (e.g. a "palm" computing device), tablette, remote control with a display or a digital cellular phone handset with a display. The network appliance is enabled for Internet access and may also provided with an infrared transmitter so as to operate as a remote control for a television having an infrared beam receiver.

In operation, a television viewer would first view an announcement that a particular television program was enabled for enhanced content. If the television viewer chooses to be presented with enhanced content, the viewer would use the network appliance to select the television channel broadcasting the particular television program. The viewer would then be given the choice as to whether to receive enhanced content or not. If the viewer chooses to receive enhanced content, the television channel and device id would then be sent, either directly or through a Wireless Application Protocol (WAP) gateway, to an Internet web server where the enhanced content is stored or through which the enhanced content can be accessed. Optionally, the time and date of channel selection can be sent as well, though the Internet web server can determine the time of the request locally. At the Internet web server there would also be stored a database containing viewer profile information and a television programming schedule for the viewer's region.

Using the data received from the network appliance as an input, the Internet web server would then perform a lookup of the database to confirm that the television program selected by the viewer does in fact include enhanced content. The time and date of channel selection is used by the Internet web server to synchronize the delivery to the network appliance of the general enhanced content triggers associated with the television program. Through such synchronization, the viewer would be presented with the same enhanced content on the network appliance as would be presented to the viewer if an enhanced content enabled television or set-top box were being used. Through the viewer identification step, the viewer may also be presented with enhanced content specifically tailored to the viewer's interests as pre-determined by the database.

What is accomplished by the present invention is the decoupling of the enhanced content from the television signal, allowing for the presentation of the enhanced content alone on a network appliance that is separate (i.e. remote) from a television set and set-top box.

If the viewer changes the channel on the network appliance to a new channel, the new television channel, (and optionally the time and date of new channel selection) is capable of being sent to the Internet web server to synchronize the delivery to the network appliance of the enhanced content (either general or tailored) associated with the new television program.

The present invention can also be used to gather polling information from viewers, and for the gathering of data for television ratings.

In accordance with an aspect of the present invention there is provided a remote network appliance for use in the presentation of enhanced television services. The remote network appliance comprises an input, a display screen, and a means for communicating with the Internet. Upon the entering of a television channel to the input, data associated with enhanced television services may be obtained over the Internet and presented on the display screen.

In accordance with another aspect of the present invention there is provided a method of presenting enhanced television services on a remote network appliance. The method comprises the steps of: (i) requesting via the remote network appliance access to the enhanced television services (ii) inputting a television channel to the remote network appliance, the television channel corresponding to a television program being broadcast with enhanced television services; (iii) forwarding the television channel via the Internet to a web server; (iv) receiving the data associated with the enhanced television services from the web server; and (v) presenting the enhanced television services on a display screen of the network appliance.

In accordance with yet another aspect of the present invention there is provided a method of delivering enhanced television services to a remote network appliance. The method comprises the steps of: (i) receiving a television channel input from the remote network appliance; (ii) retrieving decoupled general enhanced content triggers associated with the enhanced television services; and (iii) delivering the decoupled enhanced content triggers to the network appliance in synchronicity with the delivery of coupled enhanced content triggers contained in an integrated television signal.

Other aspects and features of the present invention will become apparent to those of ordinary skill in the art, upon review of the following description of specific embodiments of the invention in conjunction with the accompanying figures.

### BRIEF DESCRIPTION OF THE DRAWINGS

In figures which illustrate, by way of example only, embodiments of the present invention,
Figure 1 is a schematic diagram of a network for delivering enhanced television content through the use of a set-top box or enhanced content enabled television only;
Figure 2 illustrates two representative network appliances used in viewing enhanced content, namely a handheld computing device and a digital cellular phone;
Figure 3 is a schematic diagram of a network for delivering enhanced television content without the use of a set-top box or enhanced content enabled television; and
Figure 4 is a flowchart of a representative example of steps that may be followed by a network appliance in the presentation of enhanced content.

### DETAILED DESCRIPTION OF THE PREFERRED EMBODIMENT

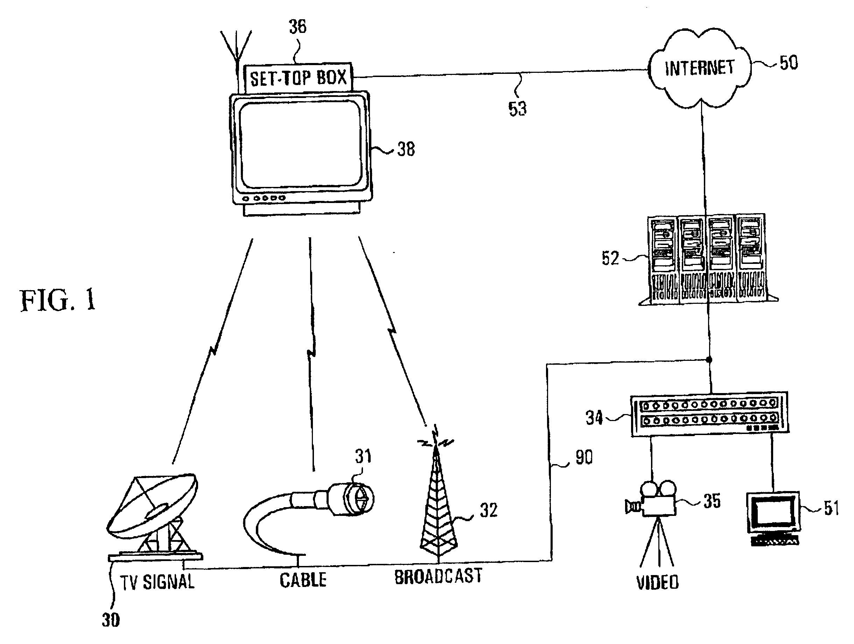

Figure 1 is a schematic diagram of a network for delivering enhanced television content through the use of a set-top box or enhanced content enabled television only. The set-up and operation of such a network is well known in the art and therefore only a brief description is provided herein.

Under the ATVEF standard, a trigger mechanism is used to alert a receiver to the availability of enhanced content. In particular, triggers are sent over the broadcast medium to a receiver and may contain information about enhancements that are available to a viewer. The viewer would then use a remote control device to choose and activate the trigger to display the enhanced content.

By way of example only, a computer 51 is illustrated running specialized software to create enhanced content which can include text, audio and/or graphics, as well as the means to accept input from a viewer to provide interactivity. Of course, there may be many arrangements of computers and/or servers performing these functions, and computer 51 is meant to be representative of only one such arrangement.

As described above, enhanced content can include historical or biographical information concerning a topic raised during a television program. Enhanced content can also include the means to interactively poll television viewers or to provide the means for television viewers to purchase an advertised product or service. Once created, the enhanced content is typically formatted in accordance with a computer programming language known as hypertext markup language ("HTML") or any markup language form such as Extensible Markup Language (XML), Wireless Markup Language (WML), etc.). A Wireless Application Protocol (WAP) gateway may be employed to format the web server's content for a particular application or device (e.g. wireless Internet phone with minibrowser). Once so formatted, the enhanced content is identified by an individual address or Universal Resource Locator (URL) and is thus capable of being handled in the same manner as any other WWW content.

The specialized software is also used to create the triggers used to alert a receiver (i.e. a television set or set-top box enabled for receipt of enhanced content) to incoming enhanced content and to define the transport mechanisms for the delivery of triggers and associated content. For example, the ATVEF specification describes two distinct models for delivering enhanced content, Transport Type A and Transport Type B. Transport Type A is defined for ATVEF receivers that maintain a back channel connection to the Internet. Transport Type A (Return-path data) is a method which may only deliver triggers to receivers, without additional enhanced content (though triggers delivered under Transport Type A can also include enhanced content for storage in a receiver's cache memory). Because usually there is no content delivered with Transport Type A, all data must be obtained over an Internet connection, using the URL passed with the trigger as a pointer to the content.

Transport Type B (Broadcast Data) provides for delivery of both ATVEF triggers and the associated enhanced content via a broadcast network. In this model, an enhanced content broadcaster pushes content to a receiver, which will store it in case the viewer chooses to view it. Therefore, while under Transport Type A, enhanced content would be stored at web server 52, under Transport Type B, enhanced content would be stored a set-top box 36. Transport B has an option to retrieve information from the Internet if it has a back channel but this is not a requirement. Also, transport B is typically used for digital programming.

Of course, web server 52 is only meant to be illustrative of any computer facility or computer facilities accessible through the Internet where enhanced content would be stored. It is possible that the storage of enhanced content could be distributed across several web servers. For purposes of clarity, only one such web server is shown.

Web server 52 may be controlled by the creator of the enhanced content, a television programmer, an advertiser or by a second party service provider which provides enhanced television services. Web server 52 may also be controlled by a cable television operator or by a service provider for the network appliance which is described in further detail below.

A video source 35 is used to deliver television programming signals to data encoder 34. Data encoder 34 integrates broadcast programming with enhanced content triggers (in the case of ATVEF Transport Type A) or enhanced content triggers and enhanced content (in the case of ATVEF Transport Type B) received from computer 51. Data encoder 34 will integrate enhanced content triggers and/or enhanced content in accordance with whatever enhanced television content standard is being used. For example, in accordance with ATVEF Transport Type A, enhanced content triggers are broadcast in line 21 of the Vertical Blanking Interval (VBI) (analog) or in the case of digital programming as an Internet Protocol (IP) multicast.

The integrated programming signal is then delivered via connection 90 to whatever broadcast medium is being used, such as satellite transmitter 30, cable 31 or over the air transmitter 32. The integrated programming signal is then broadcast across the broadcast medium to television 38 and/or set-top box 36. Of course, when a television program is not enabled for enhanced content, television 38 operates normally.

Though Figure 1 shows a set-top box being connected to television 38, such a device is not required if television 38 is enabled for the display of enhanced content. In this case, television 38 is a standard television set that requires set-top box 36 to display enhanced content. In operation, set-top box 36 decodes the integrated programming signal received from the broadcast medium and arranges for the display of whatever triggers are associated with the enhanced content on television 38. Among other information, every trigger contains a standard URL that defines the location of the enhanced content. Triggers may also contain a human-readable description of the enhanced content, such as "Click here for information about purchasing a CD of songs from this show." A viewer will typically operate a remote control device (not shown) to activate a trigger. The selection by a television viewer of a trigger would result in the delivery of enhanced content in the manner described below.

In Figure 1, set-top box 36 is shown being provided with a network connection 53 to Internet 50. This network connection is sometimes referred to as a back channel. Generally, this network connection is provided by a dial-up modem or DSL, cable or potentially a directly connected fiber connection or Ethernet contained in set-top box 36 but may be provided by any type of bi-directional access channel. It should be noted that network connection 53 is optional under the ATVEF standard, since enhanced content can be delivered directly to set-top box 36 under Transport Type B.

Under Transport Type A, the effect of a viewer selecting an enhanced content trigger is a URL request for content being made from set-top box 36 for the page or file identified in the selected URL across network communications link 53, through Internet 50 to web content server 52 where the enhanced content is stored. Web content server 52 responds to the request by retrieving the requested WWW page, and transmitting the data for that WWW page back to the set-top box 36. The client-server interaction between the set-top box 36 and the web content server 52 is usually performed in accordance with the hypertext transfer protocol ("http"). The page received by the set-top box 36 is then displayed to the viewer on television set 38.

In the case of Transport Type B where there is no back channel link 53, the enhanced content would be retrieved from set-top box 36 directly for presentation to the viewer on television 38.

The present invention provides for the delivery and presentation of enhanced content without the need for an enhanced-content enabled television or set-top box as shown in Figure 1. Instead of being presented to a television viewer on a television set, enhanced content is instead presented on a network appliance such as a handheld computing device (e.g. a "palm" computing device), tablette, remote control with a display or a digital cellular phone handset with a display. This will expand the reach of enhanced content beyond its current consumer base. The enhanced content is decoupled from the integrated television signal, allowing for the presentation of the enhanced content alone on a stand-alone network appliance.

The network appliance does not need to display television programming along with enhanced content. Instead, enhanced content is presented on the network appliance alone so that the there is no need for a large display screen, nor is there any requirement for adapting the integrated broadcast signal to the network appliance, nor is it restricted in needing large amounts of bandwidth to accommodate a television signal with integrated enhanced content (However, 3G wireless may be able to support both since it has more bandwidth). Also, this means of delivering enhanced content to private devices does not obscure the primary content (i.e. the television program).

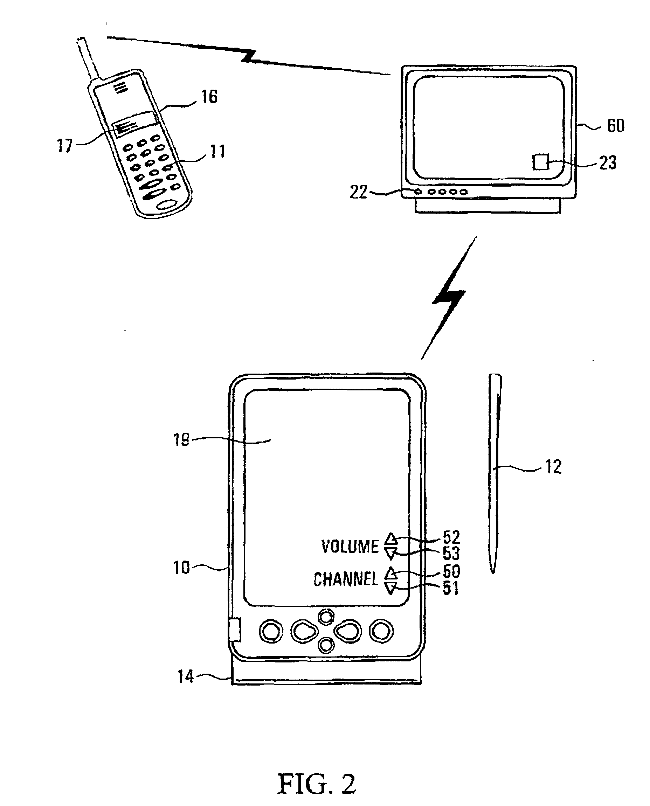

Figure 2 illustrates two representative network appliances 14, 16 used in viewing enhanced content, namely a handheld computing device 10 and a digital cellular phone 16. Any network appliance that meets the minimum requirements set out below can be used in accordance the system and method of the present invention to view enhanced television content.

The minimum requirements for a network appliance to be used in accordance with the present invention are that it: (i) be capable of receiving input corresponding to a television channel; (ii) be capable of transmitting and receiving communications (either wired or wireless) to/from an Internet network through use of HTTP or otherwise; and (iii) be capable of displaying enhanced television content transmitted from an Internet network, either in the form of standard HTML web pages or otherwise.

Though not obligatory, it is preferred that the network appliance also include some form of infrared transmitter designed to operate with an infrared receiver 22 on television 20 and be capable of executing processor executable instructions so as to operate as a remote control device for television 20.

An example of a handheld computing device that can be used in accordance with the present invention is the Palm VII handheld computer. Examples of digital cellular phones that can be used in accordance with the present invention are the Nokia 9000i and the Motorola T7389 Timeport.

With regards to handheld computing device 10, the device illustrated in Figure 2 is merely illustrative of the many types of such devices that may work in accordance with the present invention. Typically such devices provide some combination of personal information management, database functions, word processing, but these are not necessary to the operation of the present invention.

Display screen 19 includes a touch-sensitive panel that can be used for operator input. While a liquid crystal display is shown, other varieties of displays, such as electroluminescent, may also be used. Stylus 12 functions as an interactive pointer interface to programs being executed by handheld computing device 10. Specifically, the viewer can touch specific portions of the display with a hand-held stylus 12 or other pointer. Handheld computing device 10 includes software that recognizes the position that has been touched and may interpret such touch as a command. Alternatively, there may be a voice activated option to input commands to the device.

The primary role of handheld computing devices such as that shown in Figure 2 is usually not to operate as a remote control device for a television. As a result, handheld computing device 10 would be provided with add-on software (stored on a ROM chip or downloadable from the Internet) that would allow it to perform this function. The add-on software typically would display for the viewer a variety of soft-keys such as channel-up 50, channel-down 51, volume-up 52, volume-down 53, etc. The channel-up 50 and channel-down 51 soft-keys are necessary for channel selection on television 20. The soft-keys displayed on display screen 19 can be depressed by the use of stylus 12. The ability for handheld computing device 10 to select a channel on television 60 and to transmit the selected channel to/from the Internet is necessary to perform the synchronization step of the present invention.

As well, some older models of handheld computing devices of the type shown in Figure 2 do not normally come equipped with an infrared transmitter. In this case, the base of handheld computing device has an auxiliary device card chamber that is designed to receive add-on hardware. To provide the necessary infrared capability, an add-on infrared transmitter 14 is coupled to the base of handheld computing device 10 to provide the required infrared functionality. When so equipped, the handheld computing device 10 transmits coded infrared signals to an infrared receiver 22 built into television 20 to turn on the television, at a distance, to adjust the volume, tone and brightness, to change channels, and to turn the television off, etc.

Internet connectivity for handheld computing device 10 is provided by means of a wireless transmitter such as an RF modem, also referred to as an RF transceiver (not shown) for wireless transmission of enhanced television content to/from the Internet. Of course, in the alternative there may be a wired connection to the Internet 50 (not shown). An Internet minibrowser may be stored on handheld computing device, which is used to display any Internet content including enhanced television content. Typically, the Internet browser would be configured for the Wireless Application Protocol (WAP), which is a specification for a set of communication protocols to standardize the way that wireless devices, such as cellular telephones and radio transceivers, can be used for Internet access.

Also shown in Figure 2 is a digital cellular phone 16, which can also be used to view enhanced television content provided it meets the four minimum requirements set out above. Digital cellular phone 16 includes an alpha-numeric keypad 11. As with handheld computing device 10, digital cellular phone 16 can be programmed to operate as an infrared remote control device for television 20. When so equipped, a viewer depressing one or more keys on keypad 11 could change channels on television 20, to turn the television off, adjust the volume, etc. Digital cellular phone 16 also includes a display screen 17 where web content and any enhanced television content can be viewed.

The network appliance in use can store a unique id such as a Mobile Subscriber Identity Number (MSIDN) which can be employed to identify the subscriber of the device. Other forms of identification numbers can also be employed to differentiate one viewer from another. The network appliance in use may optionally store a viewer's previous television channel selections in cache memory for use in the manner described below. It may also store viewer information concerning the television viewer (such as age, sex, marital status, income, etc.). Such viewer information can be used in the manner described below to tailor the delivery of enhanced content to a viewer. Representative data of the type that can be stored in a network appliance is the following:

| MSIDN# | Sex | Cell Phone # | Region |
|---|---|---|---|
| 82038502199 | F | 332-7109 | Ottawa |

Television 60 does not have to be enabled in any way for receipt of enhanced content. Television 60 can be a standard television set having basic television functionality and an infrared receiver 22. The infrared receiver 22 receives infrared signals from a remote control transmitter, and forwards the information to a controller which has control over audio and video parameters of the television, and can instruct a tuner to tune the television to the desired channel.

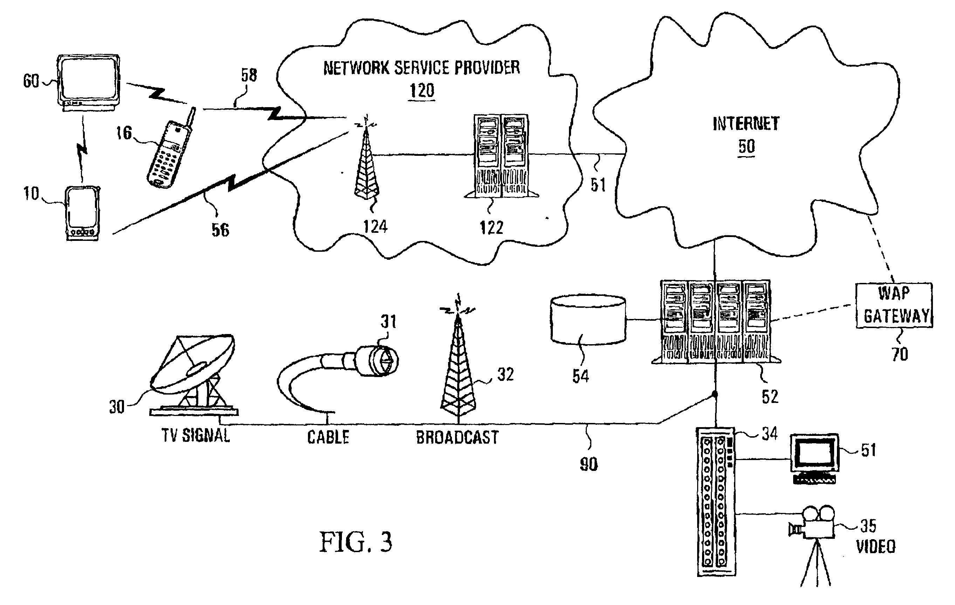

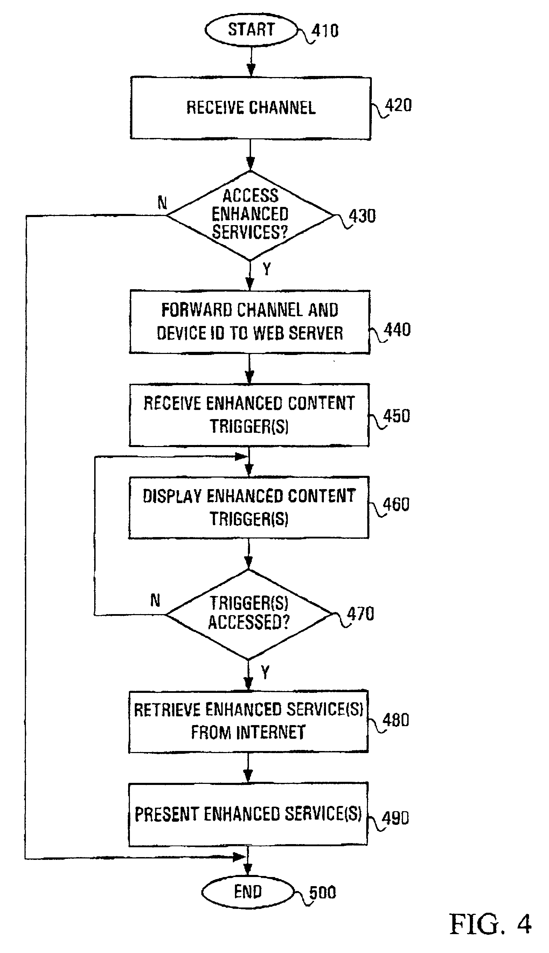

Further details on the manner in which a network appliance is used in the presentation of enhanced television services are provided by reference to Figures 3 and 4.

Figure 3 is a schematic diagram of a network for delivering enhanced television content without the use of a set-top box or enhanced content enabled television. Figure 4 is a flowchart of a representative example of steps that may be followed by a network appliance in the presentation of enhanced content.

As with Figure 1, computer 51 is used in the creation and formatting of enhanced content. A video source 35 is used to deliver television programming signals to data encoder 34. Data encoder 34 integrates broadcast programming with enhanced content triggers received from computer 51. The integrated programming signal is then delivered to whatever broadcast medium is being used, such as satellite transmitter 30, cable 31 or over the air transmitter 32. The integrated programming signal is then broadcast across the broadcast medium to television 60.

In this case, however, there is no set-top box so there is no way for a viewer to be presented with of whatever triggers are associated with the enhanced content on television 60. The integrated broadcasting signal is therefore displayed at television 60 in the normal manner without triggers.

However, a network appliance (such as handheld computing device 10, digital cellular phone 16 or any other network appliance meeting the minimum requirements set out above) can be employed to present a television viewer with enhanced content. The network appliance includes means (e.g. a wireless transceiver) for transmitting and receiving data across wireless communications links 56 or 58.

It should be noted that a network appliance used in connection with the present invention can be a Wide Area Network (WAN) enabled device or a Local Area Network (LAN) enabled device. Network service provider 120, which is comprised of network service provider server 122 and wireless base station 124, is illustrated in Figure 3 to be generic of a typical service provider for both WAN-enabled devices and LAN-enabled devices. The following description of a typical use of a network appliance is common to both WAN-enabled devices and LAN-enabled devices.

Data transmissions to/from the network appliance can be serviced by a Wireless Application Protocol (WAP) gateway 70. WAP is a specification for a set of communication protocol to standardize the way that wireless devices, such as cellular telephones and radio transceivers, can be used for Internet access, including the World Wide Web. WAP gateway 70 provides two-way data connectivity to/from the network appliance.

WAP gateway 70 is not obligatory since data exchanged between the network appliance and, for example, web server 52, could be formatted in Extensible Markup Language (XML) which is a way to create common information formats and share both the format and the data on the World Wide Web. In such a case, the data channel between Internet 50 and web server 52 would bypass WAP gateway 70 altogether.

Enhanced content would be stored at web server 52, though as described below, the speed of delivery or tighter synchronization of enhanced content to a network appliance can be increased by storing enhanced content in a cache at the edge of the network closer to the user (e.g. at a personal content cache that forms part of network service provider server 122). As with Figure 1, web server 52 is only meant to be illustrative of any computer facility or computer facilities accessible through the Internet where enhanced content would be stored.

Database 54, which is connected to web server 52, contains a channel line up and programming schedule. Representative data of the type that can be stored in database 54 is the following:

| Channel # | Date | Time | Program |
|---|---|---|---|
| 2 | 15102000 | 13:00-14:00 | Discover |

In operation, the following steps would generally be followed for the presentation of enhanced content. First, a television viewer would view an announcement 23 on television 60 that a particular television program was enabled for enhanced content. The announcement may take any form. One example of such an announcement is a logo at a corner of the television screen with a message such as "Access Interactive Content." Whatever form the announcement takes, it is broadcast for reception and display by any standard television.

To access the enhanced content, the television viewer would then ensure that the network appliance was tuned to the television channel broadcasting the television program with enhanced content. If the network appliance had been used as a remote control device by the viewer to select the channel on television 20, then the correct channel would already be stored in the network appliance. If the network appliance had not been used as a remote control device, the viewer would input the selected channel into they keypad or other input means on the network appliance. See step 420 in Figure 4.

The network appliance would then ask the television viewer to confirm that enhanced content should be accessed. See step 430 in Figure 4.

If the viewer chooses to receive enhanced content, the television channel and device id would then be sent via wired or wireless link 56 or 58 (depending on the network appliance in use) to network service provider 120, across link 51 to Internet 50. See step 440 in Figure 4.

Optionally, the time, date and selected channel # of channel selection can be sent as well, though web server 52 can determine this locally (as well as the location of the request). A representative message is in the following format: http://www.rogers-enhancedTV.com/channel lookup [channel: 9] [uniqueID: 82038502199] (Date: 15102000) (Time:13:12) (optional). If an always on connection exists for the network appliance, the television channel, device id and optional information could be automatically forwarded without prompting the user to go interactive.

If it was required for data connectivity, WAP gateway 70 would forward the data received from the network appliance to web server 52. If WAP gateway 70 was not required, the data received would be forwarded directly from Internet 50 to web server 52.

What follows is a description of one possible sequence of events at database 54. Upon receipt of the data from the network appliance, web server 52 performs a database lookup at database 54 to confirm that the television program selected by the viewer does in fact include enhanced content. The appropriate enhanced content trigger(s) associated with the television program selected by the viewer is then obtained from web server 52. Representative enhanced content triggers of the type that can obtained from web server 52 are the following:

| Date | Time | Trigger |
|---|---|---|
| 15022000 | 13:20-13:30 | Do you wish to receive more information on children's science toys? |
| 15102000 | 13:40-13:50 | Do you want to see more investigative programs? |

The time and date of channel selection is then used by web server 52 to synchronize the delivery to the network appliance of the enhanced content triggers associated with the television program. Through such synchronization, the viewer is presented with the same general enhanced content triggers on the network appliance as would be presented to the viewer if an enhanced content enabled television or set-top box were being used. If the program does not contain interactive content a message is returned to the viewer displaying 'No interactive content available for this program'.

The enhanced content triggers are then forwarded by web server 52 either to WAP gateway 70 or directly to Internet 50. If it is necessary for data connectivity, WAP gateway 70 would reformat the triggers for the appropriate display screen of the network appliance in use. WAP gateway 70 would also ensure that efficient packet requests are made to minimize the amount of bandwidth across wireless link 56 or 58. The mark up language used by WAP gateway 70 to do the formatting of the triggers may be, for example, hand held device mark up language (HDML) or wireless application protocol mark up language (WML). HDML is similar to HTML used in world wide web servers, but allows information to be formatted for hand held devices. WML is a standard for delivery of WWW content wireless communication devices such as digital cellular phone 16, and is similar to HDML.

The enhanced content triggers, properly formatted, are then forwarded by WAP gateway 70 across Internet 50 to network service provider 120 and then across wireless link 56 or 58 to the network appliance. See step 450 in Figure 4. The viewer is then presented on the network appliance with the same general enhanced content triggers on the network appliance as would be presented to the viewer as if an enhanced content enabled television or set-top box were being used. See step 460 in Figure 4.

Through the delivery of such triggers to the network appliance in use by the television viewer in synchronization with the delivery of such triggers to an enhanced content enabled set-top box or television, any enhanced content capable of being presented on the network appliance can be presented to the television viewer. In the case of digital cellular phone 16 having a display screen 17 capable of only displaying text messages, any enhanced content comprising text messages can be displayed. In the case of handheld computing device 10, any enhanced content comprising graphics, sound or text can be presented to the television viewer.

The viewer then uses the network appliance to select and activate an enhanced content trigger. See step 470 in Figure 4. For example, the text associated with an enhanced content trigger may be highlighted for presentation to a viewer (i.e. "Click here for more information on this broadcast"). The text can be selected by the viewer by simply "clicking on" or selecting the highlighted text with his or her pointing device (i.e., stylus or keys) in a conventional manner.

The selection by a viewer of a trigger results in a URL request for content being made to web content server 52 where the enhanced content is stored. See step 480 in Figure 4. Web server 52 responds with the requested URL content, i.e. "page.html" which is forwarded to WAP gateway 70 for reformatting for display on the network appliance. The requested URL content, properly formatted, is then presented to the viewer on the network appliance. See step 490 in Figure 4. Through interactions between the network appliance in use and web server 52 (or any other server where WWW content was stored), a viewer can send/receive polling information or fulfill an e-commerce transaction server.

If the television viewer changes the channel on the network appliance to a new channel and elects to receive enhanced content, the new television channel and time of new channel selection would be sent to web server 52 to synchronize the delivery to the network appliance of the enhanced content triggers associated with the new television program.

It should be noted that through use of the present invention, there is even no need for an integrated television programming signal since enhanced content is sent separately from the video signal and presented to the user on the network appliance.

Through an optional viewer identification step (not shown in Figure 4), the viewer may also be presented with specific enhanced content triggers targeted to the viewer's interests. A network appliance or remote database (such as a personal content cache that forms part of network service provider server 122) may contain information about a viewer including age, sex, marital status, income, etc. This information can be analyzed by database 54 in order to select specific enhanced content triggers for delivery to the viewer's network appliance. For example, if data such as "female, age 22, likes movies" were provided to database 54, specific enhanced content triggers (such as those associated with a coupon for reduced movie admission) could be selected and delivered to the viewer's network appliance in order to entice that viewer to patronize a particular movie. Such targeting of enhanced content triggers is not possible through use of the enhanced television services system described in Figure 1 where enhanced television services are presented to a viewer on a television set that is likely to be shared among multiple viewers. This user profile information may also be obtained during subscription for cable services which could be manually entered and saved in database 54.

Having enhancements sent directly to a network appliance rather than to a television allows a viewer to save enhancements (locally or at an origin server) for later access and use.

Of course, to achieve such targeting of enhanced content triggers, a network appliance of the type described above can be used in conjunction with a set-top box or enhanced television enabled television set for targeting purposes. In this case, viewer information stored on the network appliance or remote database could be used to target specific enhanced content triggers that would not otherwise be available at a set-top box or enhanced television enabled television set. Since the enhanced content triggers (and associated enhanced content that would be selected for presentation by the network appliance viewer) would be sent to a separate device, they would not interfere with a television program being viewed by other viewers. In this manner, a viewer of a network appliance could view enhanced content (either generic or specific) that is different from enhanced content being viewed by other viewers watching the same television program.

If the network appliance maintained a cache of a viewer's previous channel selections and such channel selections were delivered to web server 52, this information could be used to provide accurate data for television ratings purposes. For example, as the viewer channel surfs without going interactive (e.g. chooses channels 2, 5, 7 and finally 9) the channel selections made by the viewer can be saved in a cache of the network appliance (if such a cache is not available, then this data can be stored in any local device connected to the network appliance) until such time as the viewer goes interactive. Once the viewer does this, the cached information can be sent to database 54 where it can be stored for further analysis to determine viewers viewing preferences and habits.

Television viewers could also use a network appliance to access an Electronic Program Guide (EPG) stored at web server 52, rather than through television 60.

The present invention also supports Transport Type B. Transport Type B employs IP trigger streams which can run on TV broadcast networks without Internet connections. Under Transport Type B, which is usually used for digital programming, enhanced content triggers and enhanced content are normally sent to a set-top box or enhanced content enabled television set via TCP/IP packets which consist of web pages and images using Unidirectional Hypertext Transfer Protocol (UHTTP) and UDP. These are cached on the set-top box or enhanced content enabled television set.

A receiver supporting IP multicast will listen on a specific multicast address for enhanced content triggers and announcements. Therefore, a network appliance which supports IP multicast (or a proxy on its behalf) could listen for enhanced content announcements and triggers and deliver them to the display screen once the viewer went interactive and the television channel was conveyed.

The above description uses ATVEF as only one example of a standard for enhanced television services with which the present invention may operate. Any standard for enhanced television services that allows for the separation of a first form of content (e.g. a television signal) from a second form of content (e.g. a WWW page) and for the delivery of these two forms of content to different devices in separate synchronization may be used in accordance with the present invention.

There are a number of optional variations that can be employed in connection with the present invention.

One optional variation relates to a means for a user to manually ensure that the appropriate enhanced content is being received on a network appliance. As explained above, announcement 23 on television 60 that a particular television program is enabled for enhanced content may take any form. While announcement 23 can be in a standardized form, it could also be designed to be depicted differently for each television program enabled for enhanced content.

As well, a form of logo matching could be used so that a user could confirm that he/she is receiving the proper enhanced content. A confirmation message forwarded to network appliance 16 could be formatted to correspond either textually or graphically (or both) to announcement 23. Such a confirmation message could be sent once at the beginning of a television broadcast, or it could be sent multiple times during the course of a broadcast. By visually confirming that announcement 23 matches the confirmation message, a user can manually verify that the correct enhanced content for the television channel being viewed is being received on the network appliance. If announcement 23 and the confirmation message do not match, then the user can change the channel on the network appliance until the correct channel is input. In so doing, steps 420-460 in Figure 4 would be repeated until announcement 23 and the confirmation message are confirmed by the user to match.

Another optional variation relates to a means for speeding up the transmission of enhanced content to a network appliance. By storing enhanced content triggers and/or enhanced ontent at the edge of the network closest to the user (such as at a personal content cache that forms part of network service provider server 122) rather than at web server 52, the speed of delivery of such information to a network appliance could increase appreciably. In so doing, any transmission delays latent in Internet 50 would be minimized which would improve synchronization with a broadcast TV program.

Since a personal content cache that forms part of network service provider 122 typically has less storage capacity than web server 52, it is usually not possible to store the totality of enhanced content triggers and enhanced content that could be accessed by users throughout a broadcast day. Therefore, a more efficient use of limited storage capacity would be to correlate a television program listing schedule with a schedule for positioning of enhanced content triggers and enhanced content to ensure that only enhanced information associated with a television program currently being broadcast (or perhaps just about to be broadcast) is available at network service provider server 122.

The enhanced content triggers and associated enhanced content capable of being presented on a network appliance can be correlated to a television broadcast schedule (which includes channel line-up, TV program names and times of broadcast). The television broadcast schedule can also be used to activate or direct content pre-positioning to a cache at the edge of the network closest to the user. An example is the following program schedule:

| Channel # | Time | Program | E1 | E2 |
|---|---|---|---|---|
| 5 | 13:30-14:00 | Friends | 13:20 | 13:40 |

The above program schedule would automatically activate content pre-positioning of enhanced content triggers and enhanced content in the following way. A first set of enhanced content triggers and enhanced content ("E1") would be forwarded to network caches such as the personal content cache that forms part of network service provider server 122 beginning at a set period of time (such as 10 minutes) before the commencement of the television show which in this case would be 13:20. A second set of enhanced content triggers and enhanced content ("E2") would be sent out to such network caches at 13:40. Depending on storage capacity, E1 would either be deleted or maintained. Once the television program concludes the cached information (E1, E2 or both) would be automatically deleted, saving cache storage space that is typically limited and expensive.

Viewers wishing to access specific enhancements (e-commerce transactions, etc) once a television program concluded would retrieve these in the manner described above from origin server 52.

Another variation of the present invention is to use it for receipt of enhanced content in areas outside of television broadcasting. For example, the present invention could be used in an airport setting for receipt by users on a wireless LAN-enabled or WAN-enabled network appliance of enhanced content that is supplementary to information on displayed on airport monitors. Instead of inputting a television channel in the manner described above in connection with Figure 3, a user would instead input a channel for receipt of airport information such as gate location, time of departure, airport map, large screen display #, terminal # etc. Similarly, the present invention could be used at a live event to deliver enhanced content supplementary to information being displayed on billboards or screens.

The present invention could also be used to deliver to a network appliance enhanced content associated with a Digital Audio Broadcast (DAB). DAB offers the ability to distribute audio while enabling additional information and programs to be broadcast simultaneously. Examples of such additional information and programs are the following: (i) text transmission, including textual descriptions of artists and song titles, electronic programming guide, traffic and travel information, electronic newspapers, etc.; (ii) graphic transmissions, including artist photographs, album covers, roadmaps, weather maps, etc.

Usually, DAB receivers must be used to decode audio programs and additional information and programs contained within the DAB signal. However, through use of the present invention, such additional information and programs can be delivered to a user on a network appliance independent of a DAB receiver (or Normal Radio Receiver, popular in today's automobiles) over the Internet. The description above that accompanies Figures 3 and 4 generally applies to the delivery of enhanced content associated with a Digital Audio Broadcast (DAB). The main difference is that television 60 would be replaced by a radio and instead of entering a television channel into a network appliance, a user would enter a station frequency (e.g. 106.1) which would be sent via an IP network to a database mapping analog frequencies to the IP address of a web server storing DAB enhanced content for that frequency.

The above description of a preferred embodiment should not be interpreted in any limiting manner since variations and refinements can be made without departing from the spirit of the invention. The scope of the invention is defined by the appended claims and their equivalents.

## Claims

1. A method of presenting enhanced services on a remote network appliance, the method comprising the steps of:
receiving an input;
forwarding the input via communication means to a web server;
receiving data associated with the enhanced services from the web server;
presenting the enhanced services on a display screen of the network appliance.

2. The method of claim 1 wherein the data associated with the enhanced services are received from the web server in synchronicity with the delivery of coupled enhanced content triggers contained in an integrated television or radio signal.

3. The method of any preceding claim further including the step of forwarding the time and date of input via the communication means to the web server.

4. The method of any preceding claim further including the steps of:
retrieving from a memory one or more inputs previously received; and
forwarding the retrieved one or more inputs via communication means to the web server.

5. The method of any preceding claim further including the steps of:
retrieving user identification data from a memory; and
forwarding the user identification data via the communication means to the web server.

6. The method of claim 5 wherein the data associated with the enhanced services received from the web server is customized to the user identification data.

7. The method of any preceding claim further including the steps of:
receiving a confirmation message on the remote network appliance;
presenting the confirmation message on a display screen of the network appliance thereby allowing a user to match the confirmation message to a broadcast announcement indicating the availability of enhanced services.

8. The method of any preceding claim wherein the input is a television channel and the enhanced services are enhanced television services.

9. The method of any preceding claim wherein the input is a radio station frequency and the enhanced services are digital audio broadcast services.

10. A computer program comprising code means for implementing the method of any one of claims 1 to 9 on a remote network appliance.

11. A computer program as claimed in claim 10 embodied as a computer readable medium.

12. A remote network appliance for use in the presentation of enhanced services comprising:
an input;
a display screen;
communication means; and
a processor executing code means for implementing the method of any one of claims 1 to 9.
